# EUROPEAN PATENT SPECIFICATION

(11) **EP 1 555 464 B1**
(45) Date of publication and mention of the grant of the patent: **30.04.2008**
(21) Application number: 04106991.5
(22) Date of filing: 27.12.2004
(51) Int. Cl.: F16H 61/36, F16H 63/20

(54) **External control device for a vehicle transmission, especially for use in a commercial vehicle**
Externe Schaltvorrichtung für den Antrieb eines Nutzfahrzeuges
Dispositif de commande externe pour la transmission d'un véhicule utilitaire.

(30) Priority: 19.01.2004 IT MI20040056
(43) Date of publication of application: 20.07.2005
(73) Proprietor: IVECO S.p.A., 10156 Torino (IT)
(72) Inventor: Moretti, Carlo, 25122 Brescia (IT)
(74) Representative: Gervasi, Gemma

(56) References cited:
- DE-A- 19 839 850
- DE-A- 19 839 855
- US-A- 4 742 724
- US-A- 5 321 993

## Description

This invention relates to an external control device for a vehicle transmission, especially for use in a commercial vehicle.

Transmission systems with an external servo-controlled device to control gear shifting and selection mechanisms are well-known in the prior art. The device is actuated by means of the gear shift lever, which is operated by the driver of the vehicle and linked to the device by means of the appropriate connections, for example a Bowden cable, or linkage mechanisms or stiff rods.

This type of device must be as straightforward as possible. It must be robust, durable, as small as possible and enable fast and accurate shifting and selection. Furthermore it must be of maximum help to the driver by facilitating the manual movements required to operate the gear shift lever so that the driver has to exert minimum force on the lever.

Patent EP-B-1108166 describes an external control device with a servo-mechanism, in which the servo-controlled shifting shaft comprises a coupling flange with a rod that is controlled directly by the gear shift lever, for example by means of a Bowden cable, or stiff rod. The rod is located inside a supplementary housing attached to the servo-mechanism, which makes construction more complex and increases the overall dimensions.

Document US-A-4742724 constitutes the closest prior art and shows all the features of the preamble of independent claim 1.

This invention aims to satisfy the requirements set forth above and overcome the drawbacks of other known solutions with an external control device for a vehicle transmission, especially designed for use in commercial vehicles.

This invention relates to an external control device for a vehicle transmission that is characterized in that it includes a shifting shaft and a selection shaft that are operated respectively by means of a first and second external lever that transforms the motion of an actuator operated by a gear shift lever into the rotational motion of a relative first and second transmission shaft, and the subsequent conversion of such rotational motion into the axial translational motion of such shifting shaft and selection shaft by means of a relative first and second internal lever, between such shifting shaft and selection shaft there being a rocker arm with a nib at the end outside the device that directly controls the shifting and selection mechanisms in the transmission.

This invention refers in particular to an external control device for a vehicle transmission, as described more fully in the claims, which are an integral part of this description.

The purposes and advantages of this invention will become clear from the following detailed description of a preferred embodiment and the drawings attached hereto, which are merely illustrative and not limitative, of which:
figure 1 illustrates a top view of the device according to this invention;
figures 2, 3, 4 and 5 illustrate cross-sectional views of the device, respectively in the planes A-A, B-B, C-C, D-D.

According to this invention the shifting shaft (with servo-mechanism) and selection shaft are driven by means of a relative first lever that transforms the traction/thrust motion of the actuator operated by the gear shift lever into the rotational motion of a shaft, and then a second lever that converts such rotational motion into an axial translational motion of the relative shafts.

In this way the selection mechanism without servo-control is completely separate from the servo-controlled shifting mechanism, which is orthogonal to the selection mechanism.

Between the shifting and selection shafts there is a rocker arm. At the end of the rocker arm that is outside the device there is a nib that directly controls the shifting and selection mechanisms in the transmission.

The device is now described with reference to the drawings, where the same reference numbers and letters are used to identify the same elements.

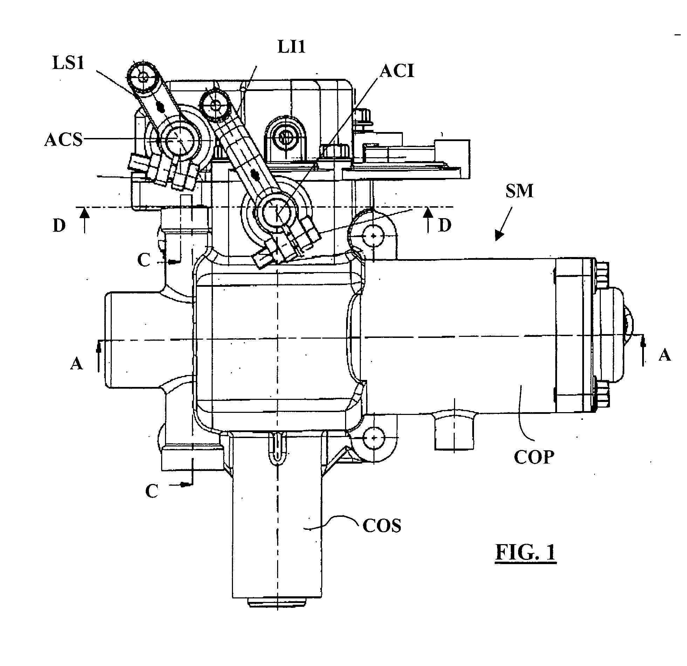

More specifically, the external view of the device (fig. 1) illustrates a first body COP that comprises a servo-mechanism SM and a second body COS that is orthogonal with and intersects the first body. In one possible embodiment, the device is placed on an appropriate mounting of the transmission that is not illustrated in the drawing.

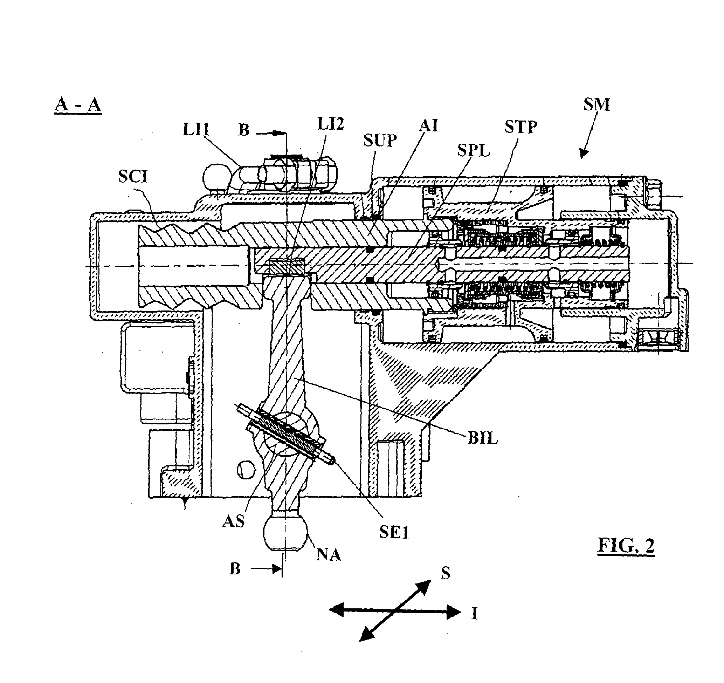

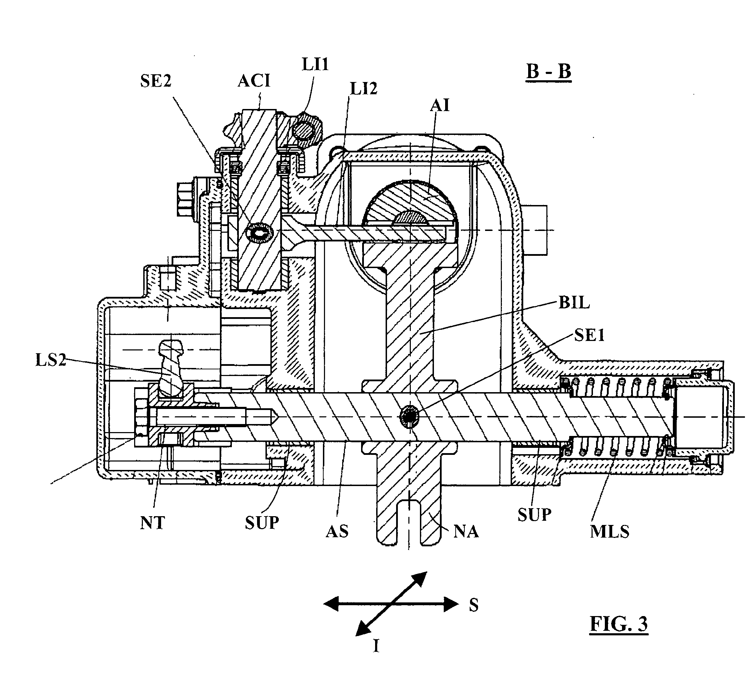

In figures 2 and 3 the main shafts AI and AS can be seen. These are arranged orthogonal to one another and transmit the translational motion that controls the respective shifting and selection mechanisms. The shafts AI and AS are inserted respectively into the first and second bodies and held by supports SUP fitted with the appropriate seals. Between such shafts there is a rocker arm BIL, at the point where the two bodies intersect, that can move orthogonally in relation to the axis of the shaft AS in a longitudinal gear shift direction I, and translate in the direction of the shaft AS according to a transverse gear selection direction S (at right angles to I).

At an intermediate position of the rocker arm BIL there is a cylindrical hole into which the shaft AS enters, fastened to the rocker arm by means of an elastic pin SE1. One end of the rocker arm BIL engages with an appropriate groove in the axis AI, while the other end comprises a nib NA that protrudes outside the device at the point of intersection between the first and second bodies. The nib NA consists of two side parts with rounded edges and a central groove in direction I. The motion of the nib NA brings about gear shifting in the direction I, or gear selection in the direction S in the transmission, which is not illustrated in the drawing.

LI1 and LS1 (fig. 1) represent levers outside the device that control the rotational motion of the respective transmission shafts ACI and ACS. The ends of these are characterized by joints that receive and execute the commands sent from the gear shift lever operated by the driver. Such commands may be transmitted for example by means of Bowden cables of the known type, which are not shown in the drawing. The external levers LI1 and LS1 and the relative transmission shafts ACI and ACS are arranged at one end of the second body COS.

One end of an internal lever LI2 is connected to the transmission shaft ACI and fastened by means of an elastic pin SE2. The other end of LI2 is inserted in an appropriate housing in the main shaft AI.

When the shaft ACI (fig. 3) rotates it controls the motion of the internal lever LI2, which in turn produces the translational motion of the shaft AI through the servo-mechanism SM of a known type, comprising a piston STP that slides inside the groove in the servo-mechanism SM. The piston STP is connected to the shaft AI and also constitutes an additional support for the actual shaft. More specifically, the lever LI2 moves a spool SPL inserted coaxially in the shaft AI, which triggers the servo-mechanism that moves the piston STP. The servo-mechanism SM amplifies the shifting force produced by the driver, making the operation easier.

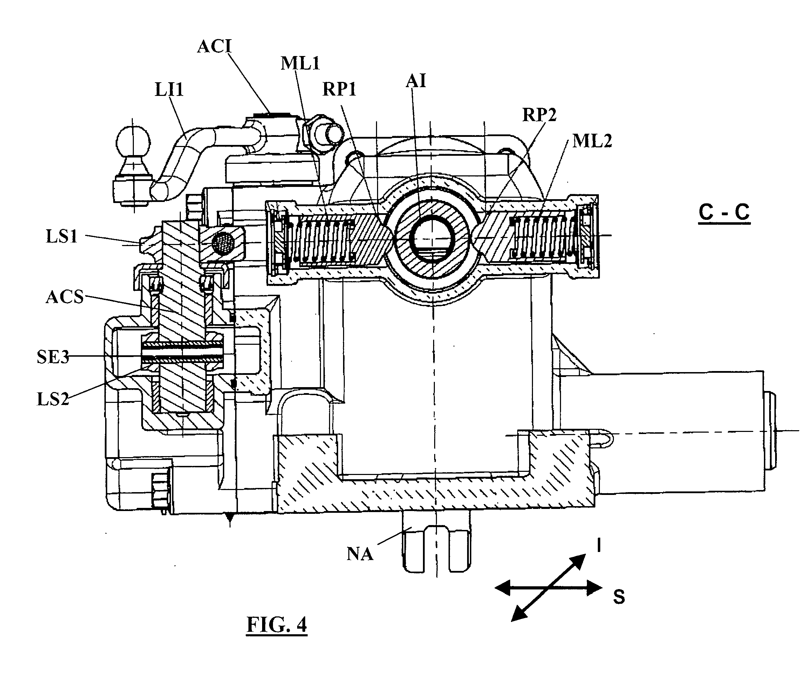

The correct position of the shaft AI is defined by two positioning rollers RP1, RP2 (fig. 4) that are kept in contact with the shaft AI by means of springs ML1, ML2 with a rounded end that engages with the appropriate grooves SCI on the surface of the shaft AI. When the servo-mechanism SM is triggered it moves the shaft AI to a position in correspondence with one of the grooves SCI. There are usually three sequential positions of the shaft AI: a central position, which corresponds to the neutral position of the gear shift lever, and two side positions, in correspondence with the opposite shifting movements, forwards or backwards in relation to neutral. The translational motion of the shaft AI produces the rotation of the rocker arm BIL and thus of the nib NA in the longitudinal direction I. The shaft AS turns with the rocker arm.

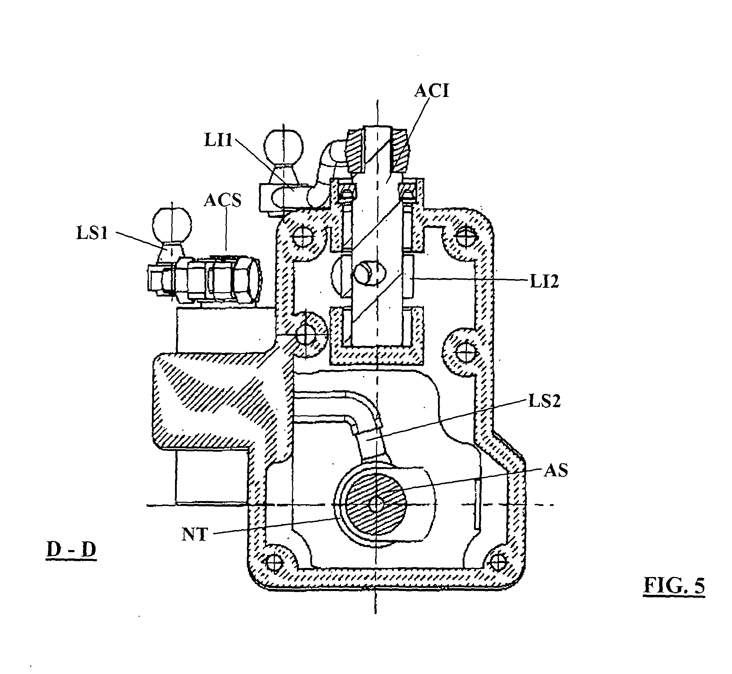

One end of an internal lever LS2 is connected to the shaft ACS (fig. 4) and fastened by means of an elastic pin SE3. The other end of LS2 is inserted in an appropriate housing at one end of the shaft AS that comprises a pawl NT (figures 3 and 5). The other end of the shaft AS terminates with a spring-back system MLS that, if no selection command is sent, moves the axis AS and thus the nib NA to the position that corresponds to neutral.

When the shaft ACS (fig. 3) rotates it controls the motion of the internal lever LI2, which in turn produces the translational motion of the shaft AS. Such translational motion of the shaft AS is not servo-controlled and causes the nib NA to translate along the transverse axis S, as a result of selection, in the neutral shifting position, effecting sideways movements in relation to this, and with an excursion according to the number of positions corresponding to the gear shifting movements effected at right angles.

The advantages in connection with the use of this invention are clear. The device is easy to construct, robust, durable, small and enables fast and accurate gear shifting and selection.

From the description set forth above it will be possible for the person skilled in the art to embody the invention without introducing any further construction details.

## Claims

1. External control device for a vehicle transmission, especially for use in a commercial vehicle, comprising a shifting shaft (AI) and a selection shaft (AS) actuated respectively by means of a first and second external lever (LI1, LS1) that transforms the motion of an actuator operated by a gear shift lever into the rotational motion of a relative first and second transmission shaft (ACI, ACS), and the subsequent conversion of said rotational motion into the axial translational motion of said shifting shaft and selection shaft by means of a relative first and second internal lever (LI2, LS2), **characterized in that** between said shifting shaft (AI) and selection shaft (AS) there being a rocker arm (BIL) that transforms the axial translational motion of said shifting and selection shafts into shifting and selection movements in the transmission.

2. Device according to claim 1, **characterized in that**:
- said shifting shaft (AI) and said selection shaft (AS) are arranged orthogonal to one another;
- said first external lever (LI1) is connected to said first transmission shaft (ACI) to which said first internal lever (LI2) is connected and which is in turn connected to said shifting shaft (AI);
- said second external lever (LS1) is connected to said second transmission shaft (ACS) to which said second internal lever (LS2) is connected and which is in turn connected to said selection shaft (AS);
- said rocker arm (BIL) is coupled at the end inside the device to said shifting shaft (AI) and at an intermediate point to said selection shaft (AS), and comprises a nib (NA) at the end outside the device that controls said shifting and selection mechanisms in the transmission.

3. Device according to claim 2, **characterized in that** said shifting shaft (AI) is servo-controlled by means of a servo-mechanism (SM) and that said selection shaft (AS) is not servo-controlled.

4. Device according to claim 2, **characterized in that** said rocker arm (BIL) can move at right angles to said selection shaft (AS) in a longitudinal gear shifting direction I, and translate in the direction of said selection shaft in a transverse gear selection direction (S) at a right angles to (I), there being a cylindrical hole in said intermediate position of the rocker arm (BIL) into which said selection shaft enters and is fastened, with said internal end of the rocker arm engaging with a specific groove in said shifting shaft (AI).

5. Device according to claim 3, **characterized in that** the correct position of said shifting shaft (AI) is defined by positioning rollers (RP1, RP2) that are held in contact with said shifting shaft and engage with grooves (SCI) on the surface of said shifting shaft, and that when said servo-mechanism (SM) is triggered it moves said shifting shaft to a position in correspondence with one of said grooves.

6. Device according to claim 4, **characterized in that** said servo-mechanism (SM) comprises a piston (STP) that slides inside the servo- mechanism, and that said piston is connected to said shifting shaft (AI) and comprises a spool (SPL) that is inserted coaxially in said shifting shaft and to which said first internal lever (LI2) is connected, which triggers said servo-mechanism that moves the piston (STP).

7. Device according to claim 3, **characterized in that** said selection shaft (AS) turns with said rocker arm (BIL), and that said second internal lever (LI2) is connected to one end of said selection shaft (AS) by means of a pawl (NT).

8. Device according to claim 3, **characterized in** the other end of said selection shaft (AS) terminates with a spring-back system (MLS) that, if no selection command is sent, moves said selector shaft and thus said nib (NA) to the neutral position.

## Patentansprüche

1. Externe Steuervorrichtung für ein Fahrzeuggetriebe, insbesondere zur Verwendung in einem Nutzfahrzeug, umfassend eine Schaltwelle (AI) und eine Auswahlwelle (AS), die jeweils mittels eines ersten und zweiten externen Hebels (LI1, LS1) betätigt werden, der die Bewegung eines Aktors, der durch einen Gangschalthebel bedient wird, in die rotatorische Bewegung einer in Beziehung stehenden ersten und zweiten Getriebewelle (ACI, ACS), und die nachfolgende Umwandlung der Drehbewegung in die axiale Translationsbewegung der Schaltwelle und der Auswahlwelle mittels eines in Beziehung stehenden ersten und zweiten internen Hebels (LI2, LS2) transformiert, **dadurch gekennzeichnet, dass** es zwischen der Schaltwelle (AI) und der Auswahlwelle (AS) einen Kipphebel (BIL) gibt, der die axiale Translationsbewegung der Schalt- und Auswahlwellen in Schalt- und Auswahlbewegungen in dem Getriebe transformiert.

2. Vorrichtung nach Anspruch 1, **dadurch gekennzeichnet, dass**:
- die Schaltwelle (AI) und die Auswahlwelle (AS) senkrecht zueinander angeordnet sind;
- der erste externe Hebel (LI1) mit der ersten Getriebewelle (ACI) verbunden ist, mit der der erste interne Hebel (LI2) verbunden ist, der wiederum mit der Schaltwelle (AI) verbunden ist;
- der zweite externe Hebel (LS1) mit der zweiten Getriebewelle (ACS) verbunden ist, mit der der zweite interne Hebel (LS2) verbunden ist, der wiederum mit der Auswahlwelle (AS) verbunden ist;
- der Kipphebel (BIL) an dem Ende innerhalb der Vorrichtung mit der Schaltwelle (AI) und an einem Zwischenpunkt mit der Auswahlwelle (AS) gekoppelt ist und eine Nase (NA) an dem Ende außerhalb der Vorrichtung umfasst, die die Schalt- und Auswahlmechanismen in dem Getriebe steuert.

3. Vorrichtung nach Anspruch 2, **dadurch gekennzeichnet, dass** die Schaltwelle (AI) mittels eines Servomechanismus (SM) servogesteuert ist, und dass die Auswahlwelle (AS) nicht servogesteuert ist.

4. Vorrichtung nach Anspruch 2, **dadurch gekennzeichnet, dass** sich der Kipphebel (BIL) rechtwinklig zu der Auswahlwelle (AS) in einer longitudinalen Gangschaltrichtung (I) bewegen kann und sich in der Richtung der Auswahlwelle in einer transversalen Gangauswahlrichtung (S) rechtwinklig zu (I) umsetzen kann, wobei es ein zylindrisches Loch in der Zwischenposition des Kipphebels (BIL) gibt, in das die Auswahlwelle eintritt und in dem diese befestigt ist, wobei das interne Ende des Kipphebels mit einer spezifischen Nut in der Schaltwelle (AI) in Eingriff steht.

5. Vorrichtung nach Anspruch 3, **dadurch gekennzeichnet, dass** die richtige Position der Schaltwelle (AI) durch Positionierrollen (RP1, RP2) definiert ist, die in Kontakt mit der Schaltwelle gehalten sind und mit Nuten (SCI) an der Oberfläche der Schaltwelle in Eingriff stehen, und dass, wenn der Servomechanismus (SM) ausgelöst ist, dieser die Schaltwelle in eine Position in Übereinstimmung mit einer der Nuten bewegt.

6. Vorrichtung nach Anspruch 4, **dadurch gekennzeichnet, dass** der Servomechanismus (SM) einen Kolben (STP) umfasst, der innerhalb des Servomechanismus gleitet, und dass der Kolben mit der Schaltwelle (AI) verbunden ist und eine Trommel (SPL) umfasst, die koaxial in die Schaltwelle eingesetzt ist und mit der der erste interne Hebel (LI2) verbunden ist, welcher den Servomechanismus, der den Kolben (STP) bewegt, auslöst.

7. Vorrichtung nach Anspruch 3, **dadurch gekennzeichnet, dass** sich die Auswahlwelle (AS) mit dem Kipphebelarm (BIL) dreht, und dass der zweite interne Hebel (LI2) mit einem Ende der Auswahlwelle (AS) mittels einer Klaue (NT) verbunden ist.

8. Vorrichtung nach Anspruch 3, **dadurch gekennzeichnet, dass** das andere Ende der Auswahlwelle (AS) mit einem Rückfedersystem (MLS) endet, das, wenn kein Auswahlbefehl gesendet wird, die Auswahlwelle und somit die Nase (NA) in die neutrale Position bewegt.

## Revendications

1. Dispositif de commande extérieur destiné à la transmission d'un véhicule, spécialement pour être utilisé dans un véhicule utilitaire, comprenant un arbre de passage des vitesses (AI) et un arbre de sélection (AS) actionnés respectivement par le moyen d'un premier et d'un second levier extérieurs (Ll1, LS1) qui transforme le mouvement d'un actionneur commandé par un levier de changement de vitesses en un mouvement de rotation d'un premier et d'un second arbre de transmission associés (ACI, ACS), et la conversion consécutive dudit mouvement de rotation dudit arbre de passage des vitesses et dudit arbre de sélection par le moyen d'un premier et d'un second levier intérieurs associés (LI2, LS2), **caractérisé en ce que** se situe entre ledit arbre de passage des vitesses (Al) et ledit arbre de sélection (AS) un bras oscillant (BIL) qui transforme le mouvement axial de translation desdits arbre de passage des vitesses et arbre de sélection en des mouvements de changement de vitesses et de sélection dans la transmission.

2. Dispositif selon la revendication 1, **caractérisé en ce que** :
- ledit arbre de passage des vitesses (AI) et ledit arbre de sélection (AS) sont disposés perpendiculairement l'un à l'autre ;
- ledit premier levier extérieur (LI1) est connecté audit premier arbre de transmission (ACI) auquel est connecté ledit premier levier intérieur (LI2) et qui est connecté à son tour audit arbre de passage des vitesses (AI) ;
- ledit second levier extérieur (LS1) est connecté audit second arbre de transmission (ACS) auquel est connecté ledit second levier intérieur (LS2) et qui est connecté à son tour audit arbre de sélection (AS) ;
- ledit bras oscillant (BIL) est accouplé par son extrémité intérieure au dispositif avec ledit arbre de passage des vitesses (AI) et en un point intermédiaire avec ledit arbre de sélection (AS), et il comporte un prolongement (NA) à son extrémité extérieure au dispositif qui commande lesdits mécanismes de changement de vitesses et de sélection dans la transmission.

3. Dispositif selon la revendication 2, **caractérisé en ce que** ledit arbre de passage des vitesses (AI) est asservi par le moyen d'un servomécanisme (SM) et que ledit arbre de sélection (AS) n'est pas asservi.

4. Dispositif selon la revendication 2, **caractérisé en ce que** ledit bras oscillant (BIL) peut se mouvoir à angle droit vers ledit arbre de sélection (AS) selon une direction longitudinale I de changement de vitesses et se translater dans la direction dudit arbre de sélection selon une direction transversale (S) de sélection de rapport perpendiculaire à (I), un trou cylindrique étant présent dans ledit emplacement intermédiaire du bras oscillant (BIL) à l'intérieur duquel trou ledit arbre de sélection pénètre et est fixé, ladite extrémité intérieure du bras oscillant s'engageant dans une rainure spécifique dudit arbre de passage des vitesses (AI).

5. Dispositif selon la revendication 3, **caractérisé en ce que** la position correcte dudit arbre de passage des vitesses (AI) est définie par des rouleaux de positionnement (RP1, RP2) qui sont maintenus en contact avec ledit arbre de passage des vitesses et s'engagent avec des rainures (SCI) à la surface dudit arbre de passage des vitesses, et **en ce que** lorsque ledit servomécanisme (SM) est actionné, il déplace ledit arbre de passage des vitesses vers une position qui correspond à l'une desdites rainures.

6. Dispositif selon la revendication 4, **caractérisé en ce que** ledit servomécanisme (SM) comprend un piston (STP) qui coulisse à l'intérieur du servomécanisme, et **en ce que** ledit piston est connecté audit arbre de passage des vitesses (AI) et comprend un tiroir cylindrique (SPL) qui est introduit coaxialement dans ledit arbre de passage des vitesses et auquel ledit premier levier intérieur (LI2) est connecté, lequel déclenche ledit servomécanisme qui déplace le piston (STP).

7. Dispositif selon la revendication 3, **caractérisé en ce que** ledit arbre de sélection (AS) tourne avec ledit bras oscillant (BIL), et **en ce que** le second levier intérieur (LI2) est connecté à une extrémité dudit arbre de sélection (AS) par le moyen d'un arrêtoir (NT).

8. Dispositif selon la revendication 3, **caractérisé en ce que** l'autre extrémité dudit arbre de sélection (AS) se termine par un système de retour élastique (MLS) qui, si aucune commande de sélection n'est envoyée, déplace ledit arbre de sélection et par conséquent ledit prolongement (NA) vers la position neutre.
